# EUROPEAN PATENT SPECIFICATION

(11) **EP 1 820 611 B1**
(45) Date of publication and mention of the grant of the patent: **08.10.2008**
(21) Application number: 06110080.6
(22) Date of filing: 17.02.2006
(51) Int. Cl.: B25J 9/16

(54) **An industrial robot system**
Industrierobotersystem
Système robotisé industriel

(43) Date of publication of application: 22.08.2007
(73) Proprietor: ABB Research Ltd., 8050 Zürich (CH)
(72) Inventor: Strand, Martin, 722 46, Västerås (SE); Sjöberg, Ralph, 723 55, Västerås (SE)
(74) Representative: Reyier, Ann-Mari

(56) References cited:
- EP-A- 1 479 964
- WO-A-20/06000571
- US-A1- 2001 035 729

## Description

The present invention relates to an industrial robot system comprising at least one manipulator, and at least one wireless, portable interface device. The invention also relates to a control device, a portable interface device, and a method of communication between the portable interface device and the control device.

### PRIOR ART

Industrial robot systems according to the prior art generally comprises at least one manipulator, and at least one control device adapted to control the operation of the at least one manipulator. The manipulator comprises one or more movably connected links carrying a mounting for a tool or a product. The control device controls the manipulator to move the tool to a product and to perform work operations on the product based on a robot program. When using the industrial robot system the control device needs to be programmed with the robot program, and the robot system also needs to be monitored during its operation.

In order to facilitate programming, monitoring and/or service of the industrial robot, industrial robot systems are known to be provided with one or more wireless, portable, interface devices, adapted for communication with a user and with the control device. The user may thus program the industrial robot system and/or monitor the operation of the industrial robot system with the portable, interface device, by the portable device controlling the control device, which in turn controls the manipulator. One problem with wireless, portable devices arise when there are several control devices and/or manipulators in the industrial system, wherein the wireless device may begin to communicate with a control device about one manipulator, while the user wants to communicate, or believes he is communicating, about another manipulator. Another problem with wireless devices pertains to the safety of the industrial robot, since, if the user moves a manipulator while believing he is moving another manipulator, the moving manipulator may injure a person or equipment happening to be in its movement path.

In document US 6,167,464 a control system comprising a central processor executing control programs for several machines is shown. The document shows a mobile, human-machine interface for monitoring operations of the machines. The central processor is adapted to send data to the mobile human machine interface, which data pertains to the machines near the location of the mobile human machine interface. When a user moves in the factory the central processor thus provides data concerning the machines close to the user. The human machine interface is also adapted to receive different computer programs from the central processor based on the position of the mobile human-machine interface. The human machine interface is also adapted to receive data based on the identity of the user.

In document WO 03/025687 a communication system for a factory is shown, comprising a mobile wireless device adapted to be connected to a central computer controlling one or more process sections. The communication system also comprises a plurality of wireless access points on a data network, wherein the mobile wireless device may communicate with the central processor through one of the wireless access points.

Document US2001/0035729 discloses a method and system for connecting a mobile control and monitoring unit to a machine, e.g. a manipulator, wherein a user uses the mobile control unit to log on to the control system of the machine via a wireless interface having a limited range. Once the connection has been acknowledged, control of the communication is transferred to another, more stable, standard, wired or wireless data transmission link.

### SUMMARY OF THE INVENTION

The object of the present invention is to improve the communication between a user and an industrial robot system.

According to one aspect of the invention this object is achieved with the method according to claim 1. According to a second aspect this object is achieved with an industrial robot system according to claim 15. According to a third aspect of the invention this object is achieved with a portable, interface device according to claim 29, according to a fourth aspect the object is achieved with a control device according to claim 30, according to a fifth aspect with a computer program according to claim 31, and according to a sixth aspect with a computer readable medium according to claim 32.

Since the information transferred in the communication is controlled based on the position of the portable interface device, it is possible to achieve a more refined communication between a user, such as a programmer, a service technician or a process operator, and the industrial robot system. The information may be controlled both in the manner of which type of information that is allowed or enabled, or in the manner of changing or adjusting the information, based on the position. Furthermore, the information may be controlled both in relation to the communication between the portable, interface device and the user, and/or between the portable interface device and the control device of the industrial robot system. Furthermore, the information may be controlled in both directions of the communication.

Preferably, the industrial robot system is adapted to control the information transferred in the communication, so that the portable interface device provides services to a user based on the position of the portable device. Thus, depending on the position of the portable device, different services, such as monitoring, programming, manual control of the robot, and the like, may be provided in the portable device. Preferably a specific service is provided if the portable interface device is within or outside a limit distance from the manipulator concerned.

In a preferred embodiment, the information transferred in the communication is controlled by controlling which computer program to execute in the portable interface device based on the position of the portable interface device. Preferably the industrial robot system is adapted to communicate computer programs to the portable interface device based on the position of the portable interface device, so that the portable interface device receives and executes computer programs based on the position of the portable interface device. Thus, it is not necessary that the portable device store the programs to be used in the portable device, but the programs may be downloaded to the interface device dependent on position and on need.

In another embodiment the industrial robot system comprises at least two manipulators and the industrial robot system is adapted to control the information transferred in the communication, so that the information pertains to a subset of the manipulators dependent on the position of the portable interface device. A subset of the manipulators may comprise any number of manipulators smaller than the total number of manipulators. Preferably the subset of manipulators comprises manipulators controlled by a common control device. Preferably the subset comprises manipulators programmed to carry out work operations jointly, most preferably manipulators programmed to operate synchronously. In one embodiment, the subset of manipulators comprises only one manipulator. By restricting the information to pertain to a subset of the manipulators the risk that a user inputs instructions for one manipulator while believing that the user inputs instruction for another manipulator is decreased. Preferably the subset comprises at least the manipulator to which the portable interface device is closest. Hence the safety of the robot system is increased. In one embodiment communication pertaining to two different manipulators is enabled if the portable interface device is outside a safety zone.

In one embodiment the industrial robot system is adapted to control the information transferred in the communication based on the distance of the portable interface device from a manipulator. Preferably the industrial robot system is adapted to control the information transferred in the communication based on the distance so that the information pertains to the manipulator being closest to the portable interface device. In one embodiment the industrial robot system is adapted to control the information transferred so that the portable interface device provides different services to the user dependent on how close to the manipulator the portable interface device is. Furthermore the information may be controlled so that different information is transferred between the control device and the portable interface device depending on the position of the portable device, preferably on the distance of the portable device from the manipulator.

Alternatively, the communication may be controlled based on the position of the interface device in specific zones. The zones may be defined by the position systems ability to sense the position of the interface device, by virtual zones defined as coordinates for the portable device, or by physical zones of restricted access demanding a login in order for a user to be able to enter the area.

According to one embodiment of the invention the communication is controlled to pertain to one of at least two manipulators and so that the interface device provides one of at least two different services to the user based on the position of the portable interface device. Preferably the control of the communication is based on the distance between the portable interface device and the respective manipulators. Hence a user may walk about in a manufacturing plant and may communicate about different manipulators, preferably the closest manipulator, and with different levels of services provided by the interface device, depending on the position of the interface device, and the distance between the interface device and the respective manipulators.

According to one embodiment the industrial robot system comprises at least two control devices wherein the industrial robot system is adapted to establish communication between the portable interface device and one of the control devices based on the position of the portable device. This gives the same advantageous as previously described with the two manipulators, since there is less risk that the portable interface device will connect with another control device by mistake.

In one embodiment the industrial robot system is adapted to automatically establish a communication channel between the portable interface device and a control device based on the position of the portable device. Preferably the industrial robot system is also adapted to automatically change the established communication and establish another communication channel with another control device dependent on the position of the portable interface device. Thus a user will automatically be connected with different control devices and will be communicating about different manipulators at different positions. The user does not need to initiate the change him-/herself, but may simply change her/his position, when the user whishes to monitor another manipulator. Thus there is a smaller probability that the portable interface device will be communicating about the wrong manipulator, and it takes less time to use the portable interface device.

In one embodiment the communication channel is maintained until the user inputs a change channel instruction. Thus the user is sure that the portable device communicates with the intended control device. Preferably the portable device is adapted to run in a first mode in which the channel is changed automatically, and a second mode in which the channel is maintained.

According to one embodiment the robot system is adapted to control the information so that the information pertains to a specific part of a manipulator, dependent on the position of the portable interface device. Preferably the information is controlled so that the information pertains to a part, which the portable interface device is close to, preferably the part, which is closest to the portable interface device. It is intuitive for a user to go close to a part of a manipulator, if the user wishes to monitor or control that specific part. However, there may be parts, which are not interesting to control specifically, such as a link, in which case the portable interface device may communicate about another, second closest part. Preferably the portable interface device is adapted to receive and present the status of a link or a tool mounted on the manipulator. The portable interface device may also receive and present help documentation on the specific part. The communication may also be controlled based on the positioning of the interface device in one of a plurality of specific zones, defined for each controllable part. The zones may comprise pressure plates onto which the user steps in order to gain access to a specific part of the robot.

According to one embodiment the portable interface device is adapted to, in a first mode of operation, automatically communicate about a part of a robot, and, in a second mode of operation, communicate about the manipulator as a whole. Preferably the portable device is adapted to toggle between different modes of operation depending on received input instructions from the user.

According to another embodiment the robot system is adapted to control the information transferred in the communication, so that the information comprises notifying messages between a control device and a portable interface device, if the portable interface device is inside a long-range zone. This is advantageous for example if a manipulator, other than a manipulator with which the portable interface device communicates, experiences an urgent error, wherein the control device controlling the erroneous manipulator transfers a notifying message to the portable interface device at a long range. The user may then detect the notifying message and may correct the error for the erring manipulator.

In another embodiment a manipulator may experience an error, which is not urgent, wherein the control device controlling the manipulator stores information on the error. In the event that a portable interface device passes through the long-range zone the control device transfers information on the error in a notifying message to the portable interface device. A service technician carrying the portable interface device will thus be notified of the error and may correct the error. Thus, there is no need to call the service technician only in order to correct the non-urgent error, but the error may wait until the service technician arrives for another reason.

According to one embodiment the industrial robot system is adapted to allow communication pertaining to two different manipulators if the portable interface device is within a long-range zone. Thus it is ensured that the portable interface device may receive notifying messages from several manipulators, even if the portable interface device is communicating concerning another manipulator. Thus no notifying messages will be missed.

In one embodiment of the invention the portable interface device is adapted to receive input instructions from a user for controlling the movement of a manipulator and to communicate control signals to a control device based on the input instructions, wherein the industrial robot system is adapted to adjust the control signals based on the position of the portable interface device. Preferably, the control signals are nullified if the portable interface device is far from the manipulator. Thus the manipulator stands still and there is no risk that a user moves the manipulator by mistake. This is advantageous since, if the manipulator is moved without the users knowledge, the manipulator may cause damage on a person or on equipment. The signals may be nullified by multiplying the signals with zero, by not allowing the sending of the signals, by not allowing receiving the signals, or by simply ignoring the signals.

In one embodiment the industrial robot system is adapted to adjust the control signals, so that the movement speed of the manipulator is decreased when a portable interface device is close to the manipulator. By decreasing the speed of the manipulator when the portable interface device is close to the manipulator the risk for that the manipulator moves into and damages the user is decreased. This is advantageous since, during programming of a manipulator, a user often needs to be very close to the manipulator in order to make fine adjustments of the positions of the manipulator. Furthermore, it is easier for the user to make fine adjustments of the position of the manipulator, since the movement speed of the manipulator is decreased. Preferably the control signals are nullified if the portable device is very close to the manipulator. This is advantageous since the manipulator may cause damage on the user if the manipulator moves into the user.

In one embodiment the industrial robot system is adapted to adjust control signals pertaining to a part of the manipulator based on the position of the portable interface device. Preferably, if the portable device is close to the manipulator, the control signals are adjusted so that the control signals pertaining to the part of the manipulator are nullified so that the part of the manipulator stands still, else so that the movement speed of the part is decreased. Thus the user may move some parts of the manipulator while other parts stand still, which increases the safety for the user at close distances from the manipulator.

In one embodiment the portable interface device is adapted to receive input instructions from a user for controlling the movement of a manipulator and to communicate control signals to a control device based on the input instructions, wherein the industrial robot system is adapted to adjust the control signals based on the orientation of the portable interface device. Usually the portable interface device comprises a movement actuator adapted to receive movement instructions in a particular direction from the user, such as a joystick or the like. When the user actuates the movement actuator, the portable interface device is adapted to transmit control signals moving the manipulator based on the actuation. Preferably the industrial robot system is adapted to adjust the control signals based on the orientation of the portable interface device so that when the user actuates the movement actuator in one direction relative to the manipulator, the manipulator is moved in the same direction. Thus the manual control of the movement becomes more intuitive.

In one embodiment the industrial robot system is adapted to control the information transferred in the communication based on the identity of the user. Preferably, different services are provided in the portable interface device, depending on the identity, station and/or authorization of the user. Preferably the communication, and/or services provided in the portable interface device, is controlled based on an assigned task the user is to perform. Preferably, the user may select the task to perform from a list of tasks. Preferably the portable interface device is adapted to provide services relating to controlling and programming the manipulator if the portable interface device identifies the user as a programmer. Thus the risk for errors is decreased.

### BRIEF DESCRIPTION OF THE DRAWINGS

The invention shall now be described as non-limiting examples of the invention with reference to the attached drawings.
- Fig. 1: an industrial robot system according to the invention is shown, comprising a control device and a portable interface device.
- Fig. 2: shows a block diagram of a method according to the invention.

### DETAILED DESCRIPTION

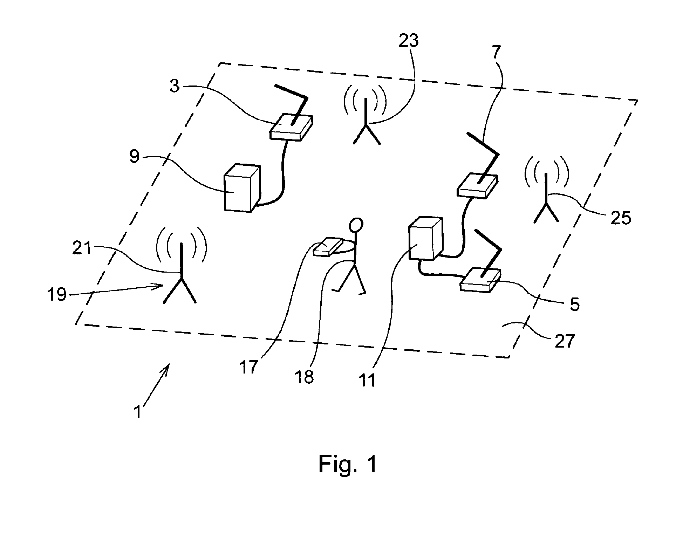

In fig. 1 an industrial robot system 1, comprising three manipulators 3, 5, 7 and two control devices 9, 11, is shown. The manipulators 3, 5, 7 each comprises a plurality of rotationally connected links 13 and a tool 15. The first control device 9 is adapted to control the first manipulator 3 and the second control device 11 is adapted to control both the second 5 and the third manipulators 7 in unison.

The industrial robot system 1 also comprises a wireless, portable interface device 17 adapted to present information to, and receive input instructions from a user 18. The portable interface device 17 is also adapted to communicate with at least one control device 9, 11 at a time, concerning one or more manipulators. In this example the portable interface device 17 is adapted to provide a plurality of services to the user, such as monitoring the operation of the manipulators, programming of the manipulators, manual control of the movement of the manipulators, and presenting information concerning the status of the manipulators. The portable interface device 17 may also communicate with a control device concerning other matters.

The industrial robot system also comprises a position determining system 19 adapted to determine the position of the portable interface device 17. In this example the position determine system 19 comprises three antennae 21, 23, 25 adapted for communication with the portable interface device 17. Thus the three antennae 21, 23, 25 both functions as a communication link between the portable device 17 and the control devices 9, 11. The position determining system 19 is adapted to calculate the position of the portable interface device 17 based on the quality of the communication with the three antennae 21, 23, 25. This is called triangulation in the art.

The industrial robot system 1 is adapted to control the information transferred in the communication based on the position of the portable interface device 17. In this example the information is controlled so that the industrial robot system 1 downloads different programs to the portable device 17 depending on the position. Thus the portable device 17 receives different programs and runs different programs based on the position. The portable device 17 is thus adapted to provide different services to the user dependent on the position of the portable device 17.

Furthermore the robot system 1 controls the information transferred in the communication so that different types of information is allowed depending on the position. In this example the industrial robot system 1 comprises at least two manipulators, namely three manipulators 3, 5, 7, and the industrial robot system 1 is adapted to control the information transferred in the communication so that the information pertains to a subset of the manipulators 3, 5, 7 dependent on the position of the portable interface device 17. In this example the industrial robot system 1 also comprises at least two control devices 9, 11, and the industrial robot system 1 is adapted to establish the communication between the portable interface device 17 and a subset of the control devices 9, 11 based on the position of the portable interface device 17. In this example the industrial robot system 1 is adapted to establish a communication with either the first control device 9 pertaining to its manipulator 3 or with the second control device 11 pertaining to its manipulators 5, 7.

In this example the industrial robot system is adapted to establish a communication channel with a control device controlling the manipulator to which the portable device 17 is the closest. Thus, when a user is close to the third manipulator 7 the portable device 17 communicates with the second control device 11 about the third manipulator 7. When the portable device moves towards the first manipulator 3 the portable device 17 changes communication channel to the first control device 9 instead, and the communication pertains to the first manipulator 3.

The robot system 1 is adapted to communicate a notifying message to the user concerning a manipulator 3, 5, 7, if the portable interface device 17 is inside a long-range zone. In this case the long-range zone 27 is depicted around the first manipulator 1. The long-range zone may be an area within an outer boundary as in the figure, but it may also be an area between an outer boundary and an inner boundary, the area outside an inner boundary, or have any other shape. The boundary itself may be of any shape, including circular and square. In this example the control device 9 is adapted to transfer a notifying message comprising an error message, telling the user 18 of the portable interface device 17, that there is an error with the first manipulator 3, which needs to be fixed. A similar notifying message may also comprise information of other kinds, such as an error message for the control device per se, or a short operation oriented message, such as 'ready to use', 'operation finished' or the like.

Some errors that are experienced by a robot system may be very urgent and needs to be attended immediately. In this case the robot system 1 communicates a notifying message to the portable interface device 17, which presents the notifying message to the user 18, so that the user 18 may attend the error immediately. Preferably the notifying message is generated automatically upon sensing the error.

In another case the error may be a less important error, which does not need to be attended immediately. In this case the first control device 9 controlling the manipulator 3 experiencing the error, stores information on the error and transmits a notifying message to the portable device 17, when the portable device 17 comes close to the manipulator 3. In this case the user 18, who may be a service technician, may correct the error while the user is on site performing other types of service work on other manipulators. Thus there is no need to call a service technician only because of the error; instead the error can wait until a service technician arrives for other reasons. Examples of such non-urgent errors are if someone has forgotten to put the robot in a calibration point, if an error is repeated constantly even though the robot still works properly, or if it is time for a preventive control of the manipulator.

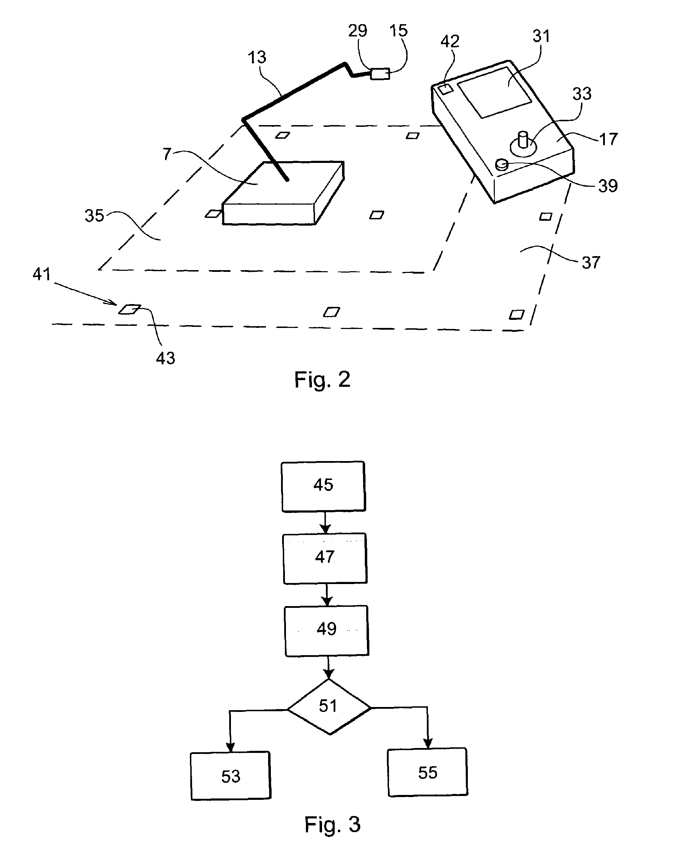

The industrial robot system is adapted to allow two or more communication channels at the same time concerning different manipulators, if the portable device is inside the long-range zone. In this example the industrial robot system 1 is adapted to allow communication pertaining two or more manipulators, if the communication comprises notifying messages and if the portable device is outside a control zone 37 (fig. 2), inside which manual control of the movement of the manipulator is allowed. The industrial robot system 1 is further adapted to control the information, so that the portable device 17 cannot transmit control signals pertaining to two different manipulators, since there is then a risk that the control signals may be confused, so that the user moves one manipulator while believing he moves another.

The industrial robot system 1 is also adapted to control the information transferred in the communication based on the identity of the user 18. Depending on the identity different input and output signals are transferred between the control device and the portable device and different information, such as different status signals for a manipulator and different interfaces, is shown to the user, since different operators need different information. In this example if the user 18 is a service technician and the industrial robot system is adapted to control the information transferred so that error messages are shown to the user. If, on the other hand, the user is a programmer, the industrial robot system is adapted to control the information transferred so that programming information and a programming service is presented to the user in the portable device. In the same manner, if the user is an operator, the portable interface device is adapted to present monitoring information and status information on the manipulator. Depending on the identity of the user the portable device 17 also presents different interfaces according to the preferences of the user.

In fig. 2 the third manipulator 7 and the portable interface device 17 are shown. The robot system 1 is adapted to control the information transferred in the communication so that the information pertains to a part 29 of the manipulator 7, dependent on the position of the portable interface device 17. In this example the information is controlled to pertain to a part 29 of the manipulator 7, which the portable interface device 17 is close to. In this example the portable device 17 is close to the tool 29 of the third manipulator 7, and the industrial robot system is adapted to control the information transferred in the communication to pertain to the tool 29. Thus a user who wishes to monitor, program or otherwise examine a specific part 29 of a manipulator 7 holds the portable device 17 close to that part 29 of the manipulator, wherein the robot system 1 is adapted to provide the user with appropriate services in the portable device 17.

In this example the portable interface device 17 comprises a touch sensitive display 31 and an actuator 33. The portable interface device 17 is adapted to receive input instructions from the user via said display 31 and actuator 33. The portable device 17 is adapted to receive input instructions in said display 31 for controlling various parameters of the industrial robot system 1. The portable device 17 is also adapted to present status information concerning the manipulator and tool 29 in said display 31.

The portable device 17 is also adapted to receive input instructions in said actuator 33, for controlling the movement of the manipulator 7 and to communicate control signals to a control device based on the input instructions. Thus the user may manually control the movement of the manipulator by actuating the actuator. In the art this is also named joging the manipulator. In this example the robot system 1 is adapted to adjust the control signals based on the position of the portable interface device 17. In this example the robot system 1 adjusts the control signals so that the movement speed of the manipulator 7 is decreased when the portable interface device 17 is close to the manipulator 7. Thus there is a lower probability that the manipulator will move into the user 18 when the user manually controls the movement of the manipulator, since the movement speed is decreased when the user is closer to the manipulator, so that the user have more time to react and stop the movement or to move himself, if the manipulator is beginning to move into the user.

Preferably the control signals are adjusted so that the manipulator 7 cannot move into an area close to the portable device 17. Since the user 18 needs to hold the portable device 17, the user 18 is close to the interface device. By assuming a safety distance from the device and adjusting the control signals so that the manipulator 7 cannot enter this area, it is ensured that the manipulator will not move into the user. Furthermore the portable device may present a warning if the manipulator is close to a person or some other type of known equipment.

In this example the industrial system 1 is also adapted to adjust the control signals based on the orientation of the portable interface device. The position determining system 19 is adapted to sense the orientation of the portable device, and the industrial robot system 1 is adapted to adjust the control signals so that the manipulator moves in the same direction as that, in which the user influences the actuator. According to the prior art, the direction in which the user influences the actuator is measured relative to the portable operating device, so that, for example, if the user pulls the actuator away from the user, the manipulator moves north, even if the portable device is oriented so that the direction away from the user is south. According to the invention the control signals are adjusted so that the manipulator moves south as the actuator is actuated to the south, which is more intuitive for the user.

In fig. 2 a safety zone 35 and a control zone 37, are shown around the third manipulator 7. The safety zone 35 is shaped around the length of the manipulator, so that the manipulator cannot reach outside the safety zone 35. The control zone 37 is shaped so that a user inside the control zone 37 always can see the manipulator from within the control zone 37. The industrial robot system 1 is adapted to control the information transferred in the communication, so that manual movement control of the manipulator by the user is enabled when the portable device 17 is inside the control zone 37. The industrial robot system is further adapted to adjust the information transferred in the communication so that manual control of the manipulator is enabled inside the safety zone only if the user pushes a safety button 39 on the portable device. Thus it is ensured that the manipulator stops if the user gets hit by the manipulator and drops the portable device. Other safety routines may also be associated with the safety zone 35. Outside the safety zone 35, however, the user may control and move the manipulator 7 freely, since the manipulator cannot reach outside the safety zone.

The portable device 17 is adapted to operate in different modes of operation depending on received input instructions. In a normal operating mode, the portable operating device 17 is adapted to control the communication dependent on the position as previously described. In a task operating mode, the portable interface device 17 is adapted to control the communication and provide different services to the user based on the position of the portable device and on a specific selected task to be performed. The task may be selected by, for example, the user, an administrator or the industrial system itself. In a manual mode, the portable operating device 17 is adapted to mainly respond to input instructions, and to avoid controlling the communication depending on the position of the portable device. The portable device 17 is adapted to establish and change communication channels, to communicate pertaining to a manipulator and to provide services to the user, based on input instructions from the user. In a communication mode, the portable operating device is adapted to control the communication so that the communication mainly pertains to monitoring of the industrial robot system and receiving notifying messages. Furthermore the portable operating device is adapted to receive notifying messages from a larger number of manipulators, so that the risk that an error is missed decreases. Naturally, the portable operating device does not need to operate in the same mode of operation in respect of all the different control features of the invention described, but may be adapted to have different modes of operation for each, or for each group, of the features of the invention.

In fig. 2, the industrial robot system comprises a second position determining system 41. The second position determining system comprises one transponder 42 arranged on the portable interface device, and a plurality of transponders 43 arranged on different locations around the manipulator. The second position determining system is adapted to sense the position of the portable device based on the signals received in the transponders 42, 43. In this example, the transponders 42, 43 are Rf-ID circuits, wherein each transponder has its own identity. Thus, the position determining system is adapted to sense the position of several individual portable devices, and to identify the separate portable devices.

The invention is not limited to the position determining systems shown, but may comprise any type of position determining system without any limitations. Several positioning determining systems are known in other fields, and all systems that are adaptable for in-door use can be used in combination with the invention. Furthermore, the industrial robot system may comprise several position determining systems operable in different areas or in the same area, and the different position determining systems may have different accuracy for use at different occasions. For example, a position determining system with high accuracy may be used close to a manipulator, while a position determining system with lower accuracy may be used far from the manipulators.

Examples of position determining systems are systems that make use of triangulation departing from the strength of position signals, those that make use of an assessment of the range or coverage of position signals issued from a circuit or antennae, those that make use of detection of position signals in specific locations, angles or directions, or those that make use of inference patterns from different types of waves, such as electromagnetic waves or sound waves. The electromagnetic waves may be radio-, infrared-, microwaves, lasers, or optical waves. The position determination system may also use Rf-ID circuits, video cameras, movement sensors, heat sensors, pressure plates in the floor or elsewhere, or GPS. The position determining system may also be based on demanding a login, either at a gate for entrance into the robot system area, or to unlock the computer system of the portable interface device, which login comprises stating the position of the portable device.

The industrial robot system 1 is also adapted to store information about the use of a portable device 17 by a user in a database. In this example the robot system is adapted to store information on the time periods in which the portable device is used. The robot system is also adapted to store information on the position of the portable device at different times and the movements of the portable device. From this information it is possible to estimate an optimal number of portable interface devices. The robot system is also adapted to store information on the communication between the portable device and a control device, in particular information on the time periods in which the portable device communicates concerning with different manipulators. From this information it is possible to discover the amount of manual attention needed by different manipulators.

In fig 3, a method of communication between a wireless, portable interface device, and at least one control device adapted to control the operation of at least one manipulator in an industrial robot system is shown in block diagram form. The wireless, portable interface device is also adapted for communication with a user.

The method of communication comprises sensing the position of the portable interface device with a position determining system in step 45.

In a step 47, the method comprises establishing a communication channel between the portable interface device and a subset of the control devices, based on the position of the portable interface device.

In step 49, the method comprises transferring information between the wireless, portable interface device and the control device, and controlling the information transferred in the communication based on the position of the portable interface device. In this example the information transferred in the communication is also controlled based on the distance between the portable interface device and the manipulator. Furthermore, the information is controlled based on the position so that the portable interface device receives and executes computer programs, and so that the portable interface device provides services to the user based on the position of the portable device. The information transferred in the communication is also controlled based on the identity of the user.

In a step 51 the method comprises, if the portable interface device is outside a safety zone, enabling communication pertaining to two different manipulators. The information is also controlled so that the information pertains to a subset of the manipulators. If the answer to the question in step 51 was no, the subset comprises only one manipulator, and the method continues with step 53. If the answer to the question in step 51 was yes, the subset comprises two or more manipulators, and the method continues with step 55.

In step 53 the method comprises sensing the orientation of the portable interface device, receiving input instructions from a user for controlling the movement of a manipulator in the portable interface device, communicating control signals to a control device based on the input instructions, and adjusting the control signals based on the position of the portable interface device. The control signals are adjusted so that the movement speed of the manipulator is decreased when the portable interface device is close to the manipulator. The control signals are also adjusted based on the orientation of the portable interface device.

Furthermore, the information is controlled so that the information pertains to a part of the manipulator, dependent on the position of the portable interface device, if the portable interface device is close to that part of the manipulator.

In step 55 the method comprises communicating a notifying message to the user concerning a manipulator, if the portable interface device is inside a long-range zone, and if the manipulator experiences an urgent error.

If the manipulator experiences a non-urgent error the method also comprises storing information on the error and communicating a notifying message to the user concerning the information on the stored error, if the portable interface device is inside a long-range zone.

The invention is not limited to the example illustrated above, but can be varied within the framework of the following claims. For example, the number and location of different features and elements of the robot system may vary, and a feature or element may be divided into several separate features or elements. A control device, for example, usually comprises both hardware and software and is usually divided into several separate devices communicating with each other. The robot system may comprise any number of different zones in which the information is controlled differently.

## Claims

1. A method of communication between a wireless, portable interface device (17), and at least one control device (9, 11) adapted to control the operation of at least one manipulator (3, 5, 7) in an industrial robot system (1), the wireless, portable interface device being adapted for communication with a user (18) and for communication with the at least one control device (9,11), wherein the method comprises
- sensing the position of the portable interface device (17),
- transferring information between the wireless, portable interface device (17) and the control device (9, 11), **characterised in**
- controlling the information transferred in the communication based on the position of the portable interface device (17) by controlling which computer program to execute in the portable interface device (17) based on the position of the portable interface device.

2. A method according to claim 1, **characterized in that** the information transferred in the communication is controlled, so that the portable interface device provides services to the user based on the position of the portable device (17).

3. A method according to claim 1 or 2, **characterized in that** the industrial robot system comprises at least two manipulators, wherein the information transferred in the communication is controlled, so that the information pertains to a subset of the manipulators (3, 5, 7) dependent on the position of the portable interface device.

4. A method according to any of the claims 1-3, **characterized in that** the industrial robot system comprises at least two control devices (9, 11), wherein the method comprises
- establishing a communication channel between the portable interface device and a subset of the control devices, based on the position of the portable interface device.

5. A method according to any of the claims 1-4, **characterized in that** the information transferred in the communication is controlled, so that the information pertains to a part (29) of the manipulator, dependent on the position of the portable interface device (17).

6. A method according to claim 5, **characterized in that** the information transferred in the communication is controlled to pertain to the part of the manipulator if the portable interface device is close to that part (29) of the manipulator.

7. A method according to any of the claims 1-6, **characterized in that** the method comprises
- communicating a notifying message to the user concerning a manipulator, if the portable interface device is inside a long-range zone (27).

8. A method according to any of the claims 1-7, **characterized in that** the method comprises
- receiving input instructions from a user for controlling the movement of a manipulator in the portable interface device,
- communicating control signals to a control device based on the input instructions, and
- adjusting the control signals based on the position of the portable interface device.

9. A method according to claim 8, **characterized in that** the control signals are adjusted, so that the movement speed of the manipulator is decreased when the portable interface device is close to the manipulator.

10. A method according to any of the claims 1-9, **characterized in that** the method comprises
- sensing the orientation of the portable interface device,
- receiving input instructions from a user for controlling the movement of a manipulator in the portable interface device,
- communicating control signals to a control device based on the input instructions, and
- adjusting the control signals based on the orientation of the portable interface device.

11. A method according to any of the claims 1-10, **characterized in that** the method comprises
- controlling the information transferred in the communication based on the identity of the user.

12. A method according to any of the claims 1-11, **characterized in that** the method comprises
- controlling the information transferred in the communication based on the distance between the portable interface device and a manipulator.

13. A method according to any of the claims 1-12, **characterized in that** the method comprises
- enabling communication pertaining to two different manipulators if the portable interface device is outside a safety zone.

14. An industrial robot system comprising at least one manipulator (3, 5, 7), at least one control device (9, 11) adapted to control the operation of at least one manipulator and at least one wireless, portable interface device (17) adapted for communication with a user (18) and for communication with the at least one control device (9, 11), wherein the industrial robot system (1) is adapted to sense the position of the portable interface device (17) and to control the information transferred in the communication based on the position of the portable interface device (17), **characterized in that** the industrial robot system is adapted to control the information transferred in the communication by controlling which computer program to execute in the portable interface device, based on the position of the portable interface device.

15. An industrial robot system according to claim 14, **characterized in that** the industrial robot system is adapted to control the information transferred in the communication, so that the portable interface device provides services to a user based on the position of the portable device.

16. An industrial robot system according to claim 14 or 15, **characterized in that** the industrial robot system comprises at least two manipulators and that the industrial robot system is adapted to control the information transferred in the communication, so that the information pertains to a subset of the manipulators (3; 5, 7) dependent on the position of the portable interface device.

17. An industrial robot system according to any of the claims 14-16, **characterized in that** the industrial robot system comprises at least two control devices (9, 11), wherein the industrial robot system is adapted to establish a communication channel between the portable interface device and a subset of the control devices, based on the position of the portable interface device.

18. An industrial robot system according to any of the claims 14-17, **characterized in that** the robot system is adapted to control the information transferred in the communication, so that the information pertains to a part (29) of the manipulator, dependent on the position of the portable interface device.

19. An industrial robot system according to claim 18, **characterized in that** the information is controlled to pertain to the part of the manipulator if the portable interface device is close to that part (29) of the manipulator.

20. An industrial robot system according to any of the claims 14-19, **characterized in that** the robot system is adapted to communicate a notifying message to the user concerning a manipulator, if the portable interface device is inside a long-range zone (27).

21. An industrial robot system according to any of the claims 14-20, **characterized in that** the portable interface device is adapted to receive input instructions from a user (18) for controlling the movement of a manipulator, and to communicate control signals to a control device (9, 11) based on the input instructions, wherein the industrial robot system (1) is adapted to adjust the control signals based on the position of the portable interface device (17).

22. An industrial robot system according to claim 21, **characterized in that** the industrial robot system is adapted to adjust the control signals, so that the movement speed of the manipulator (3, 5, 7) is decreased when the portable interface device (17) is close to the manipulator.

23. An industrial robot system according to any of the claims 14-22, **characterized in that** the portable interface device is adapted to receive input instructions from a user (18) for controlling the movement of a manipulator, and to communicate control signals to a control device (9, 11) based on the input instructions, wherein the industrial robot system (1) is adapted to adjust the control signals based on the orientation of the portable interface device (17).

24. An industrial robot system according to any of the claims 14-23, **characterized in that** the industrial robot system is adapted to control the information transferred in the communication based on the identity of the user (18).

25. An industrial robot system according to any of the claims 14-24, **characterized in that** the industrial robot system is adapted to control the information transferred in the communication based on the distance between the portable interface device (17) and a manipulator (3, 5, 7).

26. An industrial robot system according to any of the claims 14-25, **characterized in that** the industrial robot system is adapted to enable communication pertaining to two different manipulators if the portable interface device is outside a safety zone (35).

27. A wireless, portable, interface device adapted for communication with a user, **characterized in that** the portable interface device is adapted to communicate with an industrial robot system according to claim 14.

28. A control device, **characterized in that** the control device is adapted to control a manipulator in an industrial robot system according to claim 14, and is adapted for communication with a wireless, portable, interface device according to claim 27.

29. A computer program directly downloadable into the internal memory of a computer, **characterized in that** the computer program comprises software adapted for performing the steps in any of the claims 1 - 13.

30. A computer readable medium, having a computer program written thereon, **characterized in that** the computer program comprises software adapted for performing the steps in any of the claims 1 - 13.

## Patentansprüche

1. Kommunikationsverfahren zwischen einer drahtlosen, tragbaren Schnittstelleneinrichtung (17) und wenigstens einer Steuereinrichtung (9, 11), die so ausgelegt ist, dass diese den Betrieb wenigstens eines Manipulators (3, 5, 7) in einem Industrierobotersystem (1) steuert, wobei die drahtlose, tragbare Schnittstelleneinrichtung zur Kommunikation mit einem Nutzer (18) und zur Kommunikation mit der wenigstens einen Steuereinrichtung (9, 11) ausgelegt ist, wobei das Verfahren umfasst
- Erkennen der Position der tragbaren Schnittstelleneinrichtung (17),
- Übertragen von Information zwischen der drahtlosen, tragbaren Schnittstelleneinrichtung (17) und der Steuereinrichtung (9, 11), **gekennzeichnet durch**
- Steuern der bei der Kommunikation übertragenen Information basierend auf der Position der tragbaren Schnittstelleneinrichtung (17), indem eine Steuerung dahingehend erfolgt, welches Computerprogramm in der tragbaren Schnittstelleneinrichtung (17) basierend auf der Position der tragbaren Schnittstelleneinrichtung auszuführen ist.

2. Verfahren nach Anspruch 1, **dadurch gekennzeichnet, dass** die bei der Kommunikation übertragene Information so gesteuert wird, dass die tragbare Schnittstelleneinrichtung dem Nutzer basierend auf der Position der tragbaren Einrichtung (17) Dienste bereitstellt.

3. Verfahren nach Anspruch 1 oder 2, **dadurch gekennzeichnet, dass** das Industrierobotersystem wenigstens zwei Manipulatoren umfasst, wobei die bei der Kommunikation übertragene Information so gesteuert wird, dass die Information in Abhängigkeit von der Position der tragbaren Schnittstelleneinrichtung zu einer Untereinheit der Manipulatoren (3, 5, 7) gehört.

4. Verfahren nach einem der Ansprüche 1 bis 3, **dadurch gekennzeichnet, dass** das Industrierobotersystem wenigstens zwei Steuereinrichtungen (9, 11) umfasst, wobei das Verfahren umfasst
- Einrichten eines Kommunikationskanals zwischen der tragbaren Schnittstelleneinrichtung und einer Untereinheit der Steuereinrichtungen, basierend auf der Position der tragbaren Schnittstelleneinrichtung.

5. Verfahren nach einem der Ansprüche 1 bis 4, **dadurch gekennzeichnet, dass** die bei der Kommunikation übertragene Information so gesteuert wird, dass die Information in Abhängigkeit von der Position der tragbaren Schnittstelleneinrichtung (17) zu einem Teil (29) des Manipulators gehört.

6. Verfahren nach Anspruch 5, **dadurch gekennzeichnet, dass** die bei der Kommunikation übertragene Information so gesteuert wird, dass diese zu dem Teil des Manipulators gehört, wenn sich die tragbare Schnittstelleneinrichtung nahe diesem Teil (29) des Manipulators befindet.

7. Verfahren nach einem der Ansprüche 1 bis 6, **dadurch gekennzeichnet, dass** das Verfahren umfasst
- Kommunizieren einer Benachrichtigungsmeldung an den Benutzer bezüglich eines Manipulators, wenn sich die tragbare Schnittstelleneinrichtung innerhalb einer weiträumigen Zone (27) befindet.

8. Verfahren nach einem der Ansprüche 1 bis 7, **dadurch gekennzeichnet, dass** das Verfahren umfasst
- Empfangen von Eingabebefehlen von einem Nutzer in die tragbare Schnittstelleneinrichtung zum Steuern der Bewegung eines Manipulators,
- Kommunizieren von Steuersignalen mit einer Steuereinrichtung basierend auf den Eingabebefehlen, und
- Einstellen der Steuersignale basierend auf der Position der tragbaren Schnittstelleneinrichtung.

9. Verfahren nach Anspruch 8, **dadurch gekennzeichnet, dass** die Steuersignale so eingestellt werden, dass die Bewegungsgeschwindigkeit des Manipulators vermindert wird, wenn sich die tragbare Schnittstelleneinrichtung nahe dem Manipulator befindet.

10. Verfahren nach einem der Ansprüche 1 bis 9, **dadurch gekennzeichnet, dass** das Verfahren umfasst
- Erkennen der Orientierung der tragbaren Schnittstelleneinrichtung,
- Empfangen von Eingabebefehlen eines Nutzers in der tragbaren Schnittstelleneinrichtung zum Steuern der Bewegung eines Manipulators,
- Kommunizieren von Steuersignalen an eine Steuereinrichtung basierend auf den Eingabebefehlen, und
- Einstellen der Steuersignale basierend auf der Orientierung der tragbaren Schnittstelleneinrichtung.

11. Verfahren nach einem der Ansprüche 1 bis 10, **dadurch gekennzeichnet, dass** das Verfahren umfasst
- Steuern der bei der Kommunikation übertragenen Information basierend auf der Identität des Nutzers.

12. Verfahren nach einem der Ansprüche 1 bis 11, **dadurch gekennzeichnet, dass** das Verfahren umfasst
- Steuern der bei der Kommunikation übertragenen Information basierend auf der Entfernung zwischen der tragbaren Schnittstelleneinrichtung und einem Manipulator.

13. Verfahren nach einem der Ansprüche 1 bis 12, **dadurch gekennzeichnet, dass** das Verfahren umfasst
- Erlauben einer Kommunikation, die sich auf zwei verschiedene Manipulatoren bezieht, wenn sich die tragbare Schnittstelleneinrichtung außerhalb einer Sicherheitszone befindet.

14. Industrierobotersystem mit wenigstens einem Manipulator (3, 5, 7), wenigstens einer Steuereinrichtung (9, 11), die so ausgelegt ist, dass diese den Betrieb wenigstens eines Manipulators steuert, und wenigstens einer drahtlosen, tragbaren Schnittstelleneinrichtung (17), die zur Kommunikation mit einem Nutzer (18) und zur Kommunikation mit der wenigstens einen Steuereinrichtung (9, 11) ausgelegt ist, wobei das Industrierobotersystem (1) so ausgebildet ist, dass dieses die Position der tragbaren Schnittstelleneinrichtung (17) erkennt und die bei der Kommunikation übertragene Information basierend auf der Position der tragbaren Schnittstelleneinrichtung (17) überträgt, **dadurch gekennzeichnet, dass** das Industrierobotersystem so ausgebildet ist, dass dieses die bei der Kommunikation übertragene Information steuert, indem die Steuerung dahingehend erfolgt, welches Computerprogramm in der tragbaren Steuereinrichtung basierend auf der Position der tragbaren Schnittstelleneinrichtung auszuführen ist.

15. Industrierobotersystem nach Anspruch 14, **dadurch gekennzeichnet, dass** das Industrierobotersystem so ausgebildet ist, dass dieses die bei der Kommunikation übertragene Information steuert, so dass die tragbare Schnittstelleneinrichtung einem Nutzer basierend auf der Position der tragbaren Einrichtung Dienste bereitstellt.

16. Industrierobotersystem nach Anspruch 14 oder 15, **dadurch gekennzeichnet, dass** das Industrierobotersystem wenigstens zwei Manipulatoren umfasst und dass das Industrierobotersystem so ausgebildet ist, dass dieses die bei der Kommunikation übertragene Information so steuert, dass sich in Abhängigkeit von der Position der tragbaren Schnittstelleneinrichtung die Information auf eine Untereinheit der Manipulatoren (3; 5, 7) bezieht.

17. Industrierobotersystem nach einem der Ansprüche 14 bis 16, **dadurch gekennzeichnet, dass** das Industrierobotersystem wenigstens zwei Steuereinrichtungen (9, 11) umfasst, wobei das Industrierobotersystem so ausgebildet ist, dass dieses einen Kommunikationskanal zwischen der tragbaren Schnittstelleneinrichtung und einer Untereinheit der Steuereinrichtungen basierend auf der Position der tragbaren Schnittstelleneinrichtung einrichtet.

18. Industrierobotersystem nach einem der Ansprüche 14 bis 17, **dadurch gekennzeichnet, dass** das Robotersystem so ausgebildet ist, dass dieses die bei der Kommunikation übertragene Information so steuert, dass sich in Abhängigkeit von der Position der tragbaren Schnittstelleneinrichtung die Information auf einen Teil (29) des Manipulators bezieht.

19. Industrierobotersystem nach Anspruch 18, **dadurch gekennzeichnet, dass** die Information so gesteuert wird, dass sich diese auf den Teil des Manipulators bezieht, wenn sich die tragbare Schnittstelleneinrichtung nahe diesem Teil (29) des Manipulators befindet.

20. Industrierobotersystem nach einem der Ansprüche 14 bis 19, **dadurch gekennzeichnet, dass** das Robotersystem so ausgebildet ist, dass dieses eine Benachrichtigungsmeldung an den Nutzer bezüglich eines Manipulators kommuniziert, wenn sich die tragbare Schnittstelleneinrichtung innerhalb einer weiträumigen Zone (27) befindet.

21. Industrierobotersystem nach einem der Ansprüche 14 bis 20, **dadurch gekennzeichnet, dass** die tragbare Schnittstelleneinrichtung so ausgebildet ist, dass diese Eingabebefehle von einem Nutzer (18) zum Steuern der Bewegung eines Manipulators empfängt und Steuersignale an eine Steuereinrichtung (9, 11) basierend auf den Eingabebefehlen kommuniziert, wobei das Industrierobotersystem (1) so ausgebildet ist, dass dieses die Steuersignale basierend auf der Position der tragbaren Schnittstelleneinrichtung (17) einstellt.

22. Industrierobotersystem nach Anspruch 21, **dadurch gekennzeichnet, dass** das Industrierobotersystem so ausgebildet ist, dass dieses die Steuersignale so einstellt, dass die Bewegungsgeschwindigkeit des Manipulators (3, 5, 7) vermindert wird, wenn sich die tragbare Schnittstelleneinrichtung (17) nahe dem Manipulator befindet.

23. Industrierobotersystem nach einem der Ansprüche 14 bis 22, **dadurch gekennzeichnet, dass** die tragbare Schnittstelleneinrichtung so ausgebildet ist, dass diese Eingabebefehle von einem Nutzer (18) zum Steuern der Bewegung eines Manipulators empfängt und Steuersignale mit einer Steuereinrichtung (9, 11) basierend auf den Eingabefehlen kommuniziert, wobei das Industrierobotersystem (1) so ausgebildet ist, dass dieses die Steuersignale basierend auf der Orientierung der tragbaren Schnittstelleneinrichtung (17) einstellt.

24. Industrierobotersystem nach einem Ansprüche 14 bis 23, **dadurch gekennzeichnet, dass** das Industrierobotersystem so ausgebildet ist, dass dieses die bei der Kommunikation übertragene Information basierend auf der Identität des Nutzers (18) überträgt.

25. Industrierobotersystem nach einem der Ansprüche 14 bis 24, **dadurch gekennzeichnet, dass** das Industrierobotersystem so ausgebildet ist, dass dieses die bei der Kommunikation übertragene Information basierend auf der Entfernung zwischen der tragbaren Schnittstelleneinrichtung (17) und einem Manipulator (3, 5, 7) steuert.

26. Industrierobotersystem nach einem der Ansprüche 14 bis 25, **dadurch gekennzeichnet, dass** das Industrierobotersystem so ausgebildet ist, dass dieses eine Kommunikation erlaubt, die sich auf zwei verschiedene Manipulatoren bezieht, wenn sich die tragbare Schnittstelleneinrichtung außerhalb einer Sicherheitszone (35) befindet.

27. Drahtlose, tragbare Schnittstelleneinrichtung, die zur Kommunikation mit einem Nutzer ausgelegt ist, **dadurch gekennzeichnet, dass** die tragbare Schnittstelleneinrichtung so ausgebildet ist, dass diese mit einem Industrierobotersystem nach Anspruch 14 kommuniziert.

28. Steuereinrichtung, **dadurch gekennzeichnet, dass** die Steuereinrichtung so ausgebildet ist, dass diese einen Manipulator in einem Industrierobotersystem nach Anspruch 14 steuert, und zur Kommunikation mit einer drahtlosen, tragbaren Schnittstelleneinrichtung nach Anspruch 27 ausgebildet ist.

29. Computerprogramm, das in den internen Speicher eines Computers direkt heruntergeladen werden kann, **dadurch gekennzeichnet, dass** das Computerprogramm eine Software umfasst, die zum Durchführen der Schritte in einem der Ansprüche 1 bis 13 ausgelegt ist.

30. Durch einen Computer lesbares Medium mit einem darauf geschriebenen Computerprogramm, **dadurch gekennzeichnet, dass** das Computerprogramm eine Software umfasst, die zum Durchführen der Schnitte in einem der Ansprüche 1 bis 13 ausgelegt ist.

## Revendications

1. Procédé de communication entre un dispositif d'interface portatif sans fil (17), et au moins un dispositif de commande (9, 11) adapté pour commander le fonctionnement d'au moins un manipulateur (3, 5, 7) dans un système (1) de robot industriel, le dispositif d'interface portatif sans fil étant adapté pour communiquer avec un utilisateur (18) et pour communiquer avec ledit au moins un dispositif de commande (9, 11), le procédé comprenant les étapes suivantes :
- détection de l'emplacement du dispositif d'interface portatif (17),
- transfert d'informations entre le dispositif d'interface portatif sans fil (17) et le dispositif de commande (9, 11), **caractérisé par** le fait de :
- commander les informations transférées lors de la communication en fonction de l'emplacement du dispositif d'interface portatif (17) en commandant un programme d'ordinateur à exécuter dans le dispositif d'interface portatif (17) en fonction de l'emplacement du dispositif d'interface portatif.

2. Procédé selon la revendication 1, **caractérisé en ce que** les informations transférées lors de la communication sont commandées de telle sorte que le dispositif d'interface portatif fournit des services à l'utilisateur en fonction de l'emplacement du dispositif portatif (17).

3. Procédé selon la revendication 1 ou 2, **caractérisé en ce que** le système de robot industriel comprend au moins deux manipulateurs, les informations transférées lors de la communication étant commandées de telle sorte que les informations se rapportent à un sous-ensemble de manipulateurs (3, 5, 7) dépendant de l'emplacement du dispositif d'interface portatif.

4. Procédé selon l'une quelconque des revendications 1 à 3, **caractérisé en ce que** le système de robot industriel comprend au moins deux dispositifs de commande (9, 11), le procédé comprenant une étape consistant à :
- établir une voie de communication entre le dispositif d'interface portatif et un sous-ensemble des dispositifs de commande, en fonction de l'emplacement du dispositif d'interface portatif.

5. Procédé selon l'une quelconque des revendications 1 à 4, **caractérisé en ce que** les informations transférées lors de la communication sont commandées de telle sorte que les informations se rapportent à une partie (29) du manipulateur, dépendante de l'emplacement du dispositif d'interface portatif (17).

6. Procédé selon la revendication 5, **caractérisé en ce que** les informations transférées lors de la communication sont commandées pour se rapporter à la partie du manipulateur si le dispositif d'interface portatif est proche de cette partie (29) du manipulateur.

7. Procédé selon l'une quelconque des revendications 1 à 6, **caractérisé en ce que** le procédé comprend une étape consistant à :
- communiquer un message de notification à l'utilisateur concernant un manipulateur, si le dispositif d'interface portatif est à l'intérieur d'une zone à longue portée (27).

8. Procédé selon l'une quelconque des revendications 1 à 7, **caractérisé en ce que** le procédé comprend les étapes suivantes :
- réception d'instructions d'entrée d'un utilisateur afin de commander le mouvement d'un manipulateur dans le dispositif d'interface portatif,
- communication de signaux de commande à un dispositif de commande en fonction des instructions d'entrée, et
- ajustement des signaux de commande en fonction de l'emplacement du dispositif d'interface portatif.

9. Procédé selon la revendication 8, **caractérisé en ce que** les signaux de commande sont ajustés de telle sorte que la vitesse du mouvement du manipulateur diminue lorsque le dispositif d'interface portatif est proche du manipulateur.

10. Procédé selon l'une quelconque des revendications 1 à 9, **caractérisé en ce que** le procédé comprend les étapes suivantes :
- détection de l'orientation du dispositif d'interface portatif,
- réception d'instructions d'entrée d'un utilisateur afin de commander le mouvement d'un manipulateur dans le dispositif d'interface portatif,
- communication de signaux de commande à un dispositif de commande en fonction des instructions d'entrée, et
- ajustement des signaux de commande en fonction de l'orientation du dispositif d'interface portatif.

11. Procédé selon l'une quelconque des revendications 1 à 10, **caractérisé en ce que** le procédé comprend une étape de commande des informations transférées lors de la communication en fonction de l'identité de l'utilisateur.

12. Procédé selon l'une quelconque des revendications 1 à 11, **caractérisé en ce que** le procédé comprend une étape consistant à :
- commander les informations transférées lors de la communication en fonction de la distance comprise entre le dispositif d'interface portatif et un manipulateur.

13. Procédé selon l'une quelconque des revendications 1 à 12, **caractérisé en ce que** le procédé comprend une étape consistant à :
- autoriser la communication se rapportant à deux manipulateurs différents si le dispositif d'interface portatif est en dehors d'une zone de sécurité.

14. Système de robot industriel comprenant au moins un manipulateur (3, 5, 7), au moins un dispositif de commande (9, 11) adapté pour commander le fonctionnement d'au moins un manipulateur et d'au moins un dispositif d'interface portatif sans fil (17) adapté pour communiquer avec un utilisateur (18) et pour communiquer avec au moins un dispositif de commande (9, 11), le système de robot industriel (1) étant adapté pour détecter l'emplacement du dispositif d'interface portatif (17) et pour commander les informations transférées lors de la communication en fonction de l'emplacement du dispositif d'interface portatif (17), **caractérisé en ce que** le système de robot industriel est adapté pour commander les informations transférées lors de la communication en commandant l'exécution d'un programme d'ordinateur dans le dispositif d'interface portatif en fonction de l'emplacement du dispositif d'interface portatif.

15. Système de robot industriel selon la revendication 14, **caractérisé en ce que** le système de robot industriel est adapté pour commander les informations transférées lors de la communication, de sorte que le dispositif d'interface portatif fournit des services à un utilisateur en fonction de l'emplacement du dispositif portatif.

16. Système de robot industriel selon la revendication 14 ou 15, **caractérisé en ce que** le système de robot industriel comprend au moins deux manipulateurs et **en ce que** le système de robot industriel est adapté pour commander les informations transférées lors de la communication, de sorte que les informations se rapportent à un sous-ensemble de manipulateurs (3 ; 5, 7) dépendant de l'emplacement du dispositif d'interface portatif.

17. Système de robot industriel selon l'une quelconque des revendications 14 à 16, **caractérisé en ce que** le système de robot industriel comprend au moins deux dispositifs de commande (9, 11), le système de robot industriel étant adapté pour établir une voie de communication entre le dispositif d'interface portatif et un sous-ensemble des dispositifs de commande, en fonction de l'emplacement du dispositif d'interface portatif.

18. Système de robot industriel selon l'une quelconque des revendications 14 à 17, **caractérisé en ce que** le système de robot est adapté pour commander les informations transférées lors de la communication, de sorte que les informations se rapportent à une partie (29) du manipulateur, dépendante de l'emplacement du dispositif d'interface portatif.

19. Système de robot industriel selon la revendication 18, **caractérisé en ce que** les informations sont commandées pour se rapporter à la partie du manipulateur si le dispositif d'interface portatif est proche de cette partie (29) du manipulateur.

20. Système de robot industriel selon l'une quelconque des revendications 14 à 19, **caractérisé en ce que** le système de robot est adapté pour communiquer un message de notification à l'utilisateur concernant un manipulateur, si le dispositif d'interface portatif est à l'intérieur d'une zone à longue portée (27).

21. Système de robot industriel selon l'une quelconque des revendications 14 à 20, **caractérisé en ce que** le dispositif d'interface portatif est adapté pour recevoir les instructions d'entrée d'un utilisateur (18) afin de commander le mouvement d'un manipulateur, et de communiquer les signaux de commande à un dispositif de commande (9, 11) en fonction des instructions d'entrée, le système de robot industriel (1) étant adapté pour ajuster les signaux de commande en fonction de l'emplacement du dispositif d'interface portatif (17).

22. Système de robot industriel selon la revendication 21, **caractérisé en ce que** le système de robot industriel est adapté pour ajuster les signaux de commande, de telle sorte que la vitesse du mouvement du manipulateur (3, 5, 7) diminue lorsque le dispositif d'interface portatif (17) est proche du manipulateur.

23. Système de robot industriel selon l'une quelconque des revendications 14 à 22, **caractérisé en ce que** le dispositif d'interface portatif est adapté pour recevoir les instructions d'entrée d'un utilisateur (18) afin de commander le mouvement d'un manipulateur, et pour communiquer les signaux de commande à un dispositif de commande (9, 11) en fonction des instructions d'entrée, le système de robot industriel (1) étant adapté pour ajuster les signaux de commande en fonction de l'orientation du dispositif d'interface portatif (17).

24. Système de robot industriel selon l'une quelconque des revendications 14 à 23, **caractérisé en ce que** le système de robot industriel est adapté pour commander les informations transférées lors de la communication en fonction de l'identité de l'utilisateur (18).

25. Système de robot industriel selon l'une quelconque des revendications 14 à 24, **caractérisé en ce que** le système de robot industriel est adapté pour commander les informations transférées lors de la communication en fonction de la distance entre le dispositif d'interface portatif (17) et un manipulateur (3, 5, 7).

26. Système de robot industriel selon l'une quelconque des revendications 14 à 25, **caractérisé en ce que** le système de robot industriel est adapté pour permettre la communication se rapportant à deux manipulateurs différents si le dispositif d'interface portatif est en dehors d'une zone de sécurité (35).

27. Dispositif d'interface portatif sans fil adapté pour communiquer avec un utilisateur, **caractérisé en ce que** le dispositif d'interface portatif est adapté pour communiquer avec un système de robot industriel selon la revendication 14.

28. Dispositif de commande, **caractérisé en ce que** le dispositif de commande est adapté pour commander un manipulateur dans un système de robot industriel selon la revendication 14, et est adapté pour communiquer avec un dispositif d'interface portatif sans fil, selon la revendication 27.

29. Programme d'ordinateur directement téléchargeable dans la mémoire interne d'un ordinateur, **caractérisé en ce que** le programme d'ordinateur comprend un logiciel adapté pour exécuter les étapes de l'une quelconque des revendications 1 à 13.

30. Support lisible par ordinateur, comprenant un programme d'ordinateur écrit sur celui-ci, **caractérisé en ce que** le programme d'ordinateur comprend un logiciel adapté pour exécuter les étapes de l'une quelconque des revendications 1 à 13.
